# EUROPÄISCHE PATENTSCHRIFT

(11) **EP 2 047 705 B1**
(45) Veröffentlichungstag und Bekanntmachung des Hinweises auf die Patenterteilung: **23.11.2011**
(21) Anmeldenummer: 07785933.8
(22) Anmeldetag: 07.07.2007
(51) Int. Cl.: H04W 4/00, H04W 84/00

(54) **VERFAHREN ZUR ABWEHR VON ROAMING-STEERING MECHANISMEN**
METHOD FOR BLOCKING ROAMING STEERING MECHANISMS
PROCÉDÉ DE PROTECTION CONTRE LES MÉCANISMES D'ORIENTATION D'ITINÉRANCE

(30) Priorität: 19.07.2006 DE 102006033327
(43) Veröffentlichungstag der Anmeldung: 15.04.2009
(73) Patentinhaber: T-Mobile International AG, 53227 Bonn (DE)
(72) Erfinder: JESSEN, Peter, 53229 Bonn (DE); LEBL, Tomas, 53227 Bonn (DE); KIRSCH, Maik, 53757 Sankt Augustin (DE)
(74) Vertreter: Riebling, Peter
(86) Internationale Anmeldenummer: PCT/EP2007/006029
(87) Internationale Veröffentlichungsnummer: WO 2008/009359

(56) Entgegenhaltungen:
- US-A1- 2004 087 305
- US-A1- 2006 068 778
- US-A1- 2006 246 898
- "Digital cellular telecommunications system (Phase 2+)" ETSI STANDARDS, EUROPEAN TELECOMMUNICATIONS STANDARDS INSTITUTE, SOPHIA-ANTIPO, FR, Bd. 3-SA1, Nr. V740, Juni 2006 (2006-06), XP014034180 ISSN: 0000-0001

## Beschreibung

Die Erfindung bezieht sich auf ein Verfahren zur Abwehr von Roaming-Steering Mechanismen eines Anti-Roaming-Steering-Servers wobei das Verfahren korrupte Fehlermeldungen erkennt und durch einen geeigneten Einfluss auf die Signalisierungsabläufe eine gezielte Manipulation des Einbuchungsvorganges von ausländischen Mobilfunkkunden (Roaming-Steering) neutralisiert.

Es ist bekannt, dass sich zum Beispiel ein Kunde aus einem ausländischen Mobilfunknetz zur Nutzung von Mobilfunkfunktion in eines der Funknetze der nationalen Mobilfunknetzbetreiber seines Aufenthaltortes einbucht.

Allgemein ermöglicht das Roaming-Verfahren die Nutzung eines mobilen Endgerätes, wie zum Beispiel ein Handy in einem fremden mobilen Funknetz.

Dies ist lediglich dann möglich, wenn zwischen dem ausländischen und dem nationalen Mobilfunknetzbetreiber ein sogenanntes Roaming-Abkommen für die gegenseitige Verrechnung der Leistungen besteht.

Weitere Voraussetzung zur Durchführung des Roaming-Verfahrens ist die Erlaubnis zum Einbuchen eines Mobilfunk-Besuchers in ein entsprechendes Mobilfunknetz des besuchten Landes.

Derartige Abkommen sind als "Roaming-Abkommen" bezeichnet.

Ein Mobilfunknetz, welches für das Einbuchen derartiger Mobilfunk-Besucherkunden in ein nationales, zum Beispiel deutsches Mobilfunknetz konfiguriert ist, ist das Mobilfunknetz des Mobilfunknetzbetreibers T-Mobile-International AG.

Jedoch soll das hier beschriebene erfindungsgemäße Verfahren nicht ausschließlich auf das Mobilfunknetz der T-Mobile International AG beschränkt werden.
Vielmehr ist dieses Verfahren auch in anderen bekannten Mobilfunknetzen anwendbar.

Ein Einbuchungsvorgang eines Mobilfunkgerätes mit einem vorzugsweise ausländischen Mobilfunknetz in ein nationales Mobilfunknetz wird in der Fachsprache auch als "Location Update" (Standort-Durchbuchung) bezeichnet.

Hierbei meldet sich ein Kunde aus einem nicht-nationalen Mobilfunknetz eines Mobilfunknetzbetreibers in einem VLR (visitor location register, auch Besucherverzeichnis) an.

Für einen derartigen Einbuchungsvorgang wird eine "Update Location" -Nachricht vom dem besuchten VLR (visitor location register, auch Besucherverzeichnis) zum HLR (home location register (GSM), auch Standortverzeichnis) gesendet.

Diese Nachricht löst dann eine "Update Location"-Prozedur im HLR aus, wodurch der Teilnehmerdatensatz vom HLR in das VLR übertragen wird.

Ist die Prozedur erfolgreich abgeschlossen, wird die "Update Location"-Nachricht vom HLR erfolgreich quittiert.

Ein derartiges "Update-Location" -Verfahren ist zum Stand der Technik bekannt und wird in der Spezifikation 3GPP *TS 29.002* für ein Signalisierungsprotokoll "Mobile Application Part" ausführlich beschrieben.

Es ist weiterhin bekannt, dass ein ausländischer Mobilfunknetzbetreiber weitere Roaming-Abkommen national höher priorisiert, wie zum Beispiel Roaming-Abkommen eigener Mobilfunkbeteiligungsgesellschaften.

Selbstverständlich ist der ausländische Mobilfunknetzbetreiber daran interessiert, dass sich seine Kunden vorzugsweise in seine höher priorisierten Mobilfunknetze in dem besuchten Land einbuchen.

Laut den geltenden EU-Richtlinien ist es einem Mobilfunkkunden freigestellt, in welches ausländische Mobilfunknetz er sich einbucht, wenn er sich im Ausland aufhält.

Um das Einbuchen eigener Kunden eines Mobilfunknetzbetreibers in ausländische Mobilfunknetze zu steuer, setzen Mobilfunknetzbetreiber so genannte "Roaming-Steering-Server" ein, welche unmittelbar Einfluss auf die Signalisierung nehmen.

Hierbei wird das Einbuchen in weniger priorisierte Netze erschwert und somit die Wahrscheinlichkeit des Einbuchens in höher priorisierte Netze gesteigert.

US 2006/068778 A1 offenbart ein Verfahren zur Abwehr von Roaming-Steering Mechanismen, wobei das Verfahren eine Einbuchung eines ausländischen Mobilfunkgerätes in ein besuchtes nationales Mobilfunknetz ausführt, wenn zwischen einem ausländischen und einem nationalen Mobilfunknetzbetreiber ein Roaming-Abkommen zur gegenseitigen Verrechnung von Mobilfunkleistungen besteht. Das ausländische Mobilfunkgerät sendet beim Einbuchen eine Anfrage in Form einer Location Update Nachricht an das besuchte nationale Mobilfunknetz. Ein im besuchten nationalen Mobilfunknetz installierter Redirektion Blocker erkennt eine Manipulation oder Umleitung der Location Updaten Nachricht durch einen Roaming-Steering-Server im ausländischen Mobilfunknetz und verhindert diese, so dass sich das Mobilfunkendgerät im besuchten nationalen Mobilfunknetz einbuchen kann.

Die Aufgabenstellung der vorliegenden Erfindung besteht darin, das Einbuchen von Mobilfunkteilnehmer in ein eigenes Mobilfunknetz im Ausland zu erhöhen, um den Outbound-Roaming-Verkehr in eigenen Mobilfunkbetelligungen bei ausländischen Mobilfunknetzbetreibern zu halten.

Zur Lösung der gestellten Aufgabe ist die Erfindung durch die Merkmale des Anspruchs 1 gekennzeichnet.

Bevorzugte Ausgestaltungen der Erfindung sind in den Unteransprüchen angegeben.

Die Erfindung wird im folgenden mittels mehrerer Ausführungsbeispiele zum Gegenstand eines Anti-Roaming-Steering-Verfahrens beschrieben, welche die Wirkungsweise des Anti-Roaming-Steering-Servers spezifizieren und verdeutlichen.

Die Erfindung ist jedoch nicht auf die beschriebenen Ausführungsbeispiele zur Ausführung eines derartigen Verfahrens beschränkt.
Vielmehr werden alle Anti-Steering Verfahren erfindungsgemäß beansprucht, welche sich einzeln oder aus der Kombination der hier beschriebenen Ausführungsbeispiele ergeben.

Wesentlich zur Durchführung eines Anti-Steering-Verfahren ist, dass ein Profil von Maßnahmen in einer Datenbank des Anti-Steering-Servers hinterlegt ist und kontrolliert, ob ein Anti-Steering-Verfahren, zu welcher Zeit und in welcher Form durchgeführt wird.

Das Verfahren weist die nachfolgend beschriebenen, grundlegenden Verfahrensschritte auf:
- Das Mobilfunkgerät (Handy) wiederholt vier mal ein Update-Location, sollte eine Abweisung auf der "MAP-Signalisierung" (mobile access protocol) erfolgen.

Eine derartige Abweisung kann zum Beispiel durch Abbruch eines "TCAP abort" (transmission capability applications part), durch einen "System-Failure" (Systemfehler), durch einen "Unexpected Data Value" (unerwarteter Datenwert) oder durch Ignorieren der Update Location Procedure erfolgen.

Weitere Abweisungsmöglichkeiten sind möglich werden jedoch hier nicht näher benannt.

Eine Ausnahme ist die Abweisung mit einer "Roaming-Not-Allowed"-Meldung.

In diesem Fall erfolgt vom Mobilfunkgerät keine Wiederholung des Update-Location und der abgewiesene "PLMN-Code" (public land mobile network) wird auf die "forbidden-list" (Verbotsliste) in die SIM-Karte eingetragen.

Das Intervall für jeden "Update-Location"-Prozess ist ca. 15 Sekunden.

Hier gibt es jedoch teilweise wesentliche Unterschiede von Ablaufintervallen bei den verschiedenen Lieferanten von Mobilfunkgeräten (Handy).

Wenn keine Abweisung erfolgt, wiederholt das Mobiltelefon den "Update Location"-Prozess nach ca. 30 Sekunden.

Nach insgesamt vier Abweisungen wählt das Mobilfunkgerät ein anderes PLMN, wenn dieses sich in einem Automatic-Mode befindet.

Ist der vierte "Update Location"-Versuch von dem gleichem PLMN erfolglos, wird der Roaming-Steering-Server den fünften Versuch akzeptieren, da die Vermutung besteht, dass sich das Mobiltelefon in der Manuell-Netwerk-Selection befindet.

Erkennt der Anti-Steering-Server, dass das HLR vom roaming-Partner nicht antwortet oder den Update Location abweist, sendet der Anti-Roaming-Steering-Server dreimal eine "Update Location"-Nachricht zum dem Steering-Server im ausländischen Mobilfunknetz.

Diese Nachrichten werden vom dem Steering-Server wahrscheinlich ebenfalls abgewiesen, jedoch gezählt.

Die drei "Update Location"-Nachrichten vom Anti-Steering-Server müssen in ca. 20 Sekunden zum ausländischen Mobilfunknetz gesendet werden (abhängig von der Implementierung im Mobilfunkgerät).
In Richtung zum Mobiltelefon sendet der Anti-Steering-Server keine Abweisung.

Ein erstes Ausführungsbeispiel für die Anwendung eines Anti-Roaming-Steering-Verfahrens ist nachfolgend näher beschrieben.

Bisher fängt der Roaming-Steering-Server des ausländischen Mobilfunknetzbetreibers die "Location Update"-Nachricht aus dem nationalen Mobilfunknetz ab und weist den "Location Update"-Versuch mit einer Fehlermeldung zurück.

In der Fehlermeldung ist ein standardisierter Grund hinterlegt, welcher zum Beispiel als "TCAP abort", "System-Failure", "Unexpected Data Value", "Roaming-Not-Allowed", Unknown-Subscriber" (unbekannter Teilnehmer) ausgewiesen wird.

Das Mobilfunkgerät (Handy) versucht daraufhin bis zu viermal ein erneutes "Location Update" im Besucher-Funknetz auszuführen, was wiederum vom Steering-Server des Roaming-Partners mit jeweils einer Fehlermeldung zurückgewiesen wird.

Nach spätestens vier vergeblichen "Location Update"-Versuchen wechselt das Mobilfunkgerät in ein anderes Mobilfunknetz des besuchten Landes.
Damit wurde das Einbuchen in das nationale Mobilfunknetz zugunsten eines höher priorisierten Mobilfunknetzes unterbunden.

Ein wesentlicher Bestandteil des erfindungsgemäßen Ausführungsbeispiel eines Verfahrens zum Anti-Roaming-Steering, ist das Erkennen der Fehlermeldungen mit der Meldung: "TCAP abort", "System-Failure", "Unexpected Data Value", "Roaming-Not-Allowed", "Unknown-Subscriber" durch den Einsatz eines Anti-Steering-Servers.

Diese Zurückweisungen des Einbuchungsversuches werden nicht zum Mobilfunkgerät weitergeleitet.

Der Anti-Steering-Server simuliert mehrfache Versuche eines "Location Update" innerhalb einer bestimmten Zeit.

Für das Heimatnetz des ausländischen Mobilfunkteilnehmers wird somit signalisiert, dass der Mobilfunkteilnehmer das nationale Funknetz manuell in seinem Mobilfunkgerät ausgewählt hat.

Da der Heimatnetzbetreiber daran interessiert ist, dass sich sein Kunde in einem besuchten Land einbuchen kann, um mit Telekommunikationsdiensten Gebühren zu erzeugen, wird er nach spätestens drei bis fünf vergeblichen Location Update-Versuchen das Einbuchen in das nationale Mobilfunknetz des besuchten Landes erlauben.

Die erfolgreiche Bestätigung des "Location Update" wird dem Mobilfunknetz des ausländischen Mobilfunkteilnehmers übermittelt. Der Kunde hat sich damit erfolgreich in das nationale Mobilfunknetz eingebucht.

Das Verfahren gemäß dem ersten Ausführungsbeispiel weist somit nachfolgende Verfahrensschritte auf:
- Die "Update Location"-Nachricht wird über einen Anti-Steering-Server im nationalen Mobilfunknetz geführt.
- Vom Steering-Server des Roaming-Operators wird dieser "Location Update"-Versuch abgefangen und mit einer Fehlermeldung in das nationale Mobilfunknetz zurückgewiesen.
- Der Anti-Steering-Server erkennt die Fehlermeldung und in einer Datenbasis des Anti-Steering-Servers des nationalen Mobilfunknetzes wird ermittelt, ob und mit welchem Verfahren ein Anti-Steering durchgeführt wird.
- Wird ein Anti-Steering durchgeführt, wird die Fehlermeldung vom Steering-Server des Roaming-Operators im Anti-Steering-Server des nationalen Mobilfunknetz abgefangen und nicht zum Mobilfunkgerät weitergeleitet.
- Der Anti-Steering-Server des nationalen Mobilfunknetzes sendet zum Roaming-Operator erneut "Update Location"-Nachrichten.
- Die Verfahrensschritte 2 bis 5 wiederholen sich entsprechend der Signalisierung vom Steering-Server des Roaming-Operators und dem Anti-Steering-Verfahren des nationalen Mobilfunknetzbetreiber.
- Der Transfer der Teilnehmerdaten des ausländischen Mobilfunkteilnehmers vom HLR zum VLR wird transparent durchgelassen.

Erfolgt eine erfolgreiche Bestätigung des "Location Update"-Versuches durch das Heimatnetz des ausländischen Mobilfunkkunden, wird die Bestätigung an das Mobilfunkgerät weitergegeben - der Kunde hat sich somit erfolgreich im Netz des nationalen Mobilfunknetzes eingebucht.

Ein weiteres Ausführungsbeispiel eines erfindungsgemäßen Anti-Steering-Verfahrens ist, dass bei diesem Roaming-Steering-Verfahren der Steering-Server des Roaming-Partners die "Update Location"-Nachricht aus dem nationalen Mobilfunknetz abfängt und keine Nachricht an das nationale Mobilfunknetz zurück sendet.

Das Mobilfunkgerät erhält weder eine Fehlermeldung noch eine Bestätigung. Im Mobilfunkgerät läuft ein Timer ab.

Das Mobilfunkgerät versucht daraufhin ein erneutes Location Update im nationalen Mobilfunknetz, was wiederum vom Steering-Server des Roaming-Partners nicht beantwortet wird.

Nach spätestens vier vergeblichen "Location Update"-Versuchen wechselt das Mobilfunkgerät in ein anderes Mobilfunknetz des besuchten Landes.

Damit wird das Einbuchen in dem nationalen Mobilfunknetz zugunsten eines höher priorisierten Mobilfunknetzes unterbunden.

Ein wesentlicher Bestandteil des vorbenannten, erfindungsgemäßen Ausführungsbeispieles eines Verfahrens zum Anti-Roaming-Steering ist, dass in diesem Verfahren zum Anti-Roaming-Steering das Erkennen des Ausbleibens einer Antwort vom Heimatnetz des ausländischen Mobilfunkkunden durch den Einsatz eines Anti-Steering-Servers ist.

Der Anti-Steering-Server simuliert mehrfache "Location Update"-Versuche innerhalb einer bestimmten Zeit.

Für das Heimatnetz des ausländischen Mobilfunkteilnehmers wird signalisiert, dass der Mobilfunkkunde das nationale Mobilfunknetz manuell in seinem Mobilfunkgerät ausgewählt hat.

Da der Heimatnetzbetreiber interessiert ist, dass sich sein Kunde in einem besuchten Land einbuchen kann um mit Telekommunikationsdiensten Gebühren zu erzeugen, wird er nach spätestens drei bis fünf vergeblichen "Location Update"-Versuchen das Einbuchen in das nationale Mobilfunknetz erlauben.

Die erfolgreiche Bestätigung des "Location Update" wird dem Mobilfunkgerät des ausländischen Kunden übermittelt- der Kunde hat sich damit erfolgreich in das nationale Mobilfunknetz eingebucht.

Das Verfahren gemäß dem zweiten Ausführungsbeispiel weist somit nachfolgende Verfahrensschritte auf:
- Die "Update Location"-Nachricht wird über einen Anti-Steering-Server im nationalen Mobilfunknetz geführt.
- Vom Steering-Server des Roaming-Operators wird dieser Location Update-Versuch abgefangen. Es wird keine Antwortnachricht in das nationale Mobilfunknetz gesendet.
- Der Anti-Steering-Server erkennt das Fehlen der Nachricht. In einer Datenbasis des Anti-Steering-Server des nationalen Mobilfunknetzbetreibers wird ermittelt, ob und mit welchem Verfahren ein Anti-Steering durchgeführt werden soll.
- Wird ein Anti-Steering durchgeführt, sendet der Anti-Steering-Server des nationalen Mobilfunkbetreibers zum Roaming-Operator erneute Update Location-Nachrichten.
- Die Vorgänge 2 bis 4 wiederholen sich entsprechend der Signalisierung vom Steering-Server des Roaming-Operators und dem Anti-Steering-Verfahren des nationalen Mobilfunkbetreibers.
- Der Transfer der Teilnehmerdaten des ausländischen Mobilfunkkunden vom HLR zum VLR wird transparent durchgelassen.

Erfolgt eine erfolgreiche Bestätigung des Location Update-Versuches durch das Heimatnetz des ausländischen Mobilfunkkunden, wird die Bestätigung an das nationale Mobilfunknetz weitergegeben - der Kunde hat sich somit erfolgreich im Netz des nationalen Mobilfunkbetreibers eingebucht.

Ein weiteres Ausführungsbeispiel zur Anwendung eines Anti-Steering-Verfahrens ist, dass, wie beim ersten Verfahren, der Roaming-Steering-Server des ausländischen Mobilfunknetzbetreibers die "Update Location"-Nachricht aus dem nationalen Mobilfunknetz abfängt und den "Location Update"-Versuch mit einer Fehlermeldung zurückweist.

Ein standardisiertes Protokoll in der Fehlermeldung zur Zurückweisung einer Einbuchung ist zum Beispiel "TCAP abort", "System-Failure", "Unexpected Data Value", "Roaming-Not-Allowed", Unknown-Subscriber".

Wesentlicher Bestandteil dieses erfindungsgemäßen Ausführungsbeispiels eines Verfahrens zum Anti-Roaming-Steering ist das Erkennen der Fehlermeldungen mit den Gründen :"TCAP abort", "System-Failure", "Unexpected Data Value", "Roaming-Not-Allowed", "Unknown-Subscriber" durch den Einsatz eines Anti-Steering-Servers.

Diese Zurückweisungen des Einbuchungsversuches werden nicht zum Mobilfunkgerät weitergeleitet.

Der Anti-Steering-Server simuliert eine erfolgreiche Bestätigung des "Location Updates" in Richtung des Mobilfunkgerätes.

Somit wird aus der Sicht des Mobilfunkgerätes eine erfolgreiches "Location Update" registriert.

Bei diesem Verfahren werden keine Teilnehmerdaten vom HLR zum VLR übertragen.

Somit kann der Mobilfunkteilnehmer keine Telekommunikationsdienste nutzen, mit Ausnahme von Notrufen.

Es wird lediglich das Einbuchen in andere Mobilfunknetze in einem besuchten Land verhindert, um zum Beispiel eine erhöhte Signalisierungslast zu vermeiden.
Möchte der ausländische Mobilfunkteilnehmer in dem besuchten Land telefonieren, wird erneut eine "Update Location"-Nachricht vom VLR zum Heimatnetz gesendet, welche erneut durch den Steering-Server entsprechend behandelt wird.

Es steht dem ausländischen Mobilfunknetzbetreiber frei seine Roaming-Steering-Verfahren derart anzupassen, dass seine Kunden im Ausland wieder telefonieren können.

Eine erfolgreiche Bestätigung des "location Update" vom Heimatnetz wird dem Mobilfunkgerät des ausländischen Kunden übermittelt - der Kunde bucht sich erfolgreich in das nationale Mobilfunknetz ein und kann seine abonnierten Telekommunikationsdienste uneingeschränkt nutzen.

Das Verfahren gemäß dem dritten Ausführungsbeispiel weist somit nachfolgende Verfahrensschritte auf:
- Die "Update Location" Nachricht wird über einen Anti-Steering-Server im nationalen Mobilfunknetz geführt.
- Vom Steering-Server des Roaming-Operators wird dieser Location Update-Versuch abgefangen und mit einer Fehlermeldung in das nationale Mobilfunknetz zurückgewiesen.
- Der Anti-Steering-Server erkennt die Fehlermeldung und in einer Datenbasis des Anti-Steering-Servers des nationalen Mobilfunkbetreibers wird ermittelt, ob und mit welchem Verfahren ein Anti-Steering durchgeführt wird.
- Wird ein Anti-Steering durchgeführt, wird die Fehlermeldung vom Steering-Server des Roaming-Operators im Anti-Steering-Server des nationalen Mobilfunknetzbetreibers abgefangen und nicht zum Mobilfunkgerät weitergeleitet.
- Der Anti-Steering-Server des nationalen Mobilfunknetzbetreibers sendet zum Mobilfunkgerät des ausländischen Kunden eine simulierte erfolgreiche Bestätigung des Location Update-Versuches.
Es kommt zum "faked Location Update Accept" (gefälschte Einbuchungszulassung).

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine schematische Darstellung eines Verfahrens gemäß Ausführungsbeispiel 1
- Figur 2:: eine schematische Darstellung eines Verfahrens gemäß Ausführungsbeispiel 2
- Figur 3:: eine schematische Darstellung eines Verfahrens gemäß Ausführungsbeispiel 3

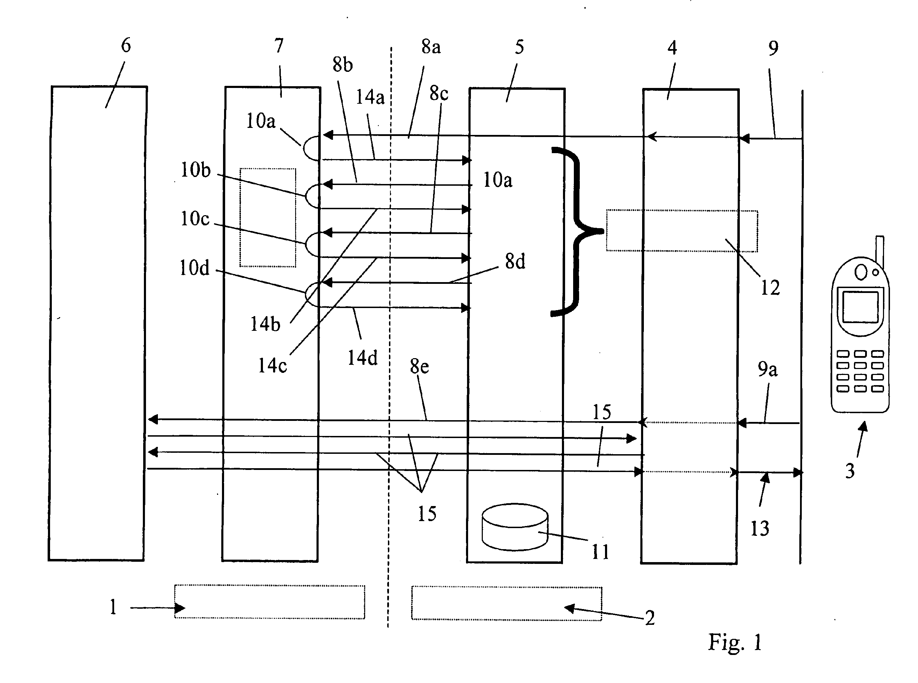

Das in Figur 1 dargestellte Verfahren zeigt das Anti-Steering Verfahren gemäß dem ersten Ausführungsbeispiel zwischen einem Mobilfunknetz eines ausländischen Mobilfunknetzbetreibers 1 (roaming operator) und einem nationalen Mobilfunknetzbetreiber 2 (z.B. T-Mobile International AG).

Allgemein ermöglicht das Roaming-Verfahren die Nutzung eines Mobilfunkgerätes 3, wie zum Beispiel ein Handy in einem fremden Mobilfunknetz.

Dies ist lediglich dann möglich, wenn zwischen dem ausländischen und dem nationalen Mobilfunknetzbetreiber 1, 2 ein sogenanntes "Roaming-Abkommen" für die gegenseitige Verrechnung der Leistungen besteht.

Befindet sich zum Beispiel ein Mobilfunkteilnehmer eines nicht-nationalen (fremden) Mobilfunknetzbetreibers 1 mit seinem Mobilfunkgerät 3 im Bereich eines nationalen Mobilfunknetzbetreibers 2, so wird seitens des Mobilfunkgerätes 3 versucht ein Roaming-Verfahren auszuführen.

Hierzu meldet sich das Mobilfunkgerät 3 mittels einem entsprechenden Signal in einem Besucherverzeichnis VLR 4 an.

Für eine derartige Anmeldung wird eine "Update Location"-Nachricht 8a in Form einer Anfrage 9 vom dem Besucherverzeichnis VLR 4 zum Standortverzeichnis HLR 6 gesendet.

Dies "Update Location"-Nachricht löst eine "Update Location"-Prozedur im Standortverzeichnis HLR 6 aus, wodurch ein gespeicherter Teilnehmerdatensatz vom Standortverzeichnis HLR 6 in das Besucherverzeichnis VLR 4 übertragen wird.

Diese "Update Location"-Prozedur wird daraufhin vom Standortverzeichnis HLR 6 quittiert, wenn diese erfolgreich abgeschlossen ist.

Darüber hinaus wird die "Update Location" insgesamt viermal, ausgehend von dem Mobilfunkgerät 3 durchgeführt, sollte eine akzeptierte Einbuchung 13 des ausländischen Mobilfunkgerätes 3 abgewiesen werden.

Derartige Abweisungen werden zum Beispiel durch Abbruch einer Übertragungsleistung einer Anmeldung, durch Systemfehler, durch unerwartete Datenwerte oder durch Ignorieren des Einbuchungs-Ablaufs oder dergleichen ausgelöst.

Ein besonderes Abweisungsmerkmal stellt die Abweisung einer Einbuchung eines Mobilfunkgerätes 3 in ein nicht-nationales Mobilfunknetz mit einer "Roaming-Not-Allowed" (nicht erlaubtes roaming)-Meldung.

Hier erfolgt nach Vorliegen einer derartigen Meldung keine Wiederholung eines "Update Location", wobei ein "PLMN"-Code auf eine Verbotsliste in die SIM-Karte des Mobilfunkgerätes 3 eingetragen wird.

Befindet sich das Mobilfunkgerät 3 im Automatik-Mode der Funknetzwahl wählt dieses nach viermaliger Abweisung ein anderes nationales Mobilnetzwerk 2 für die Einbuchung.

Die "Location Update"-Nachricht aus dem nationalen Mobilfunknetz 2 wird von einem im Funknetz des ausländischen Funknetzbetreibers 1 installierten Roaming-Steering-Server 7 abgefangen und mit einer vorbenannten Fehlermeldung 14a bis 14d zurückgewiesen.

Dieser Vorgang wird insgesamt viermal ausgeführt.

Nach der fünften Anfrage 9 richtet das Mobilfunkgerät 3 seine Anfrage an ein anderes nationales und zugunsten eines höher priorisierten Mobilfunknetzwerkes.

Der Anti-Steering-Server 5 im nationalen Mobilfunknetz 2 simuliert mehrfache Versuche eines "Location Upgrade" innerhalb einer bestimmten Zeit, wodurch das Heimatnetz 1 des ausländischen Mobilfunkteilnehmers eine manuelle Funknetzwahl im Mobilfunkgerät 3 registriert und erlaubt das Einbuchen des Mobilfunkgerätes 3 in dem nationalen Mobilfunknetz 2 des besuchten Landes.

Es folgt daraufhin eine Bestätigung der Einbuchung in das nationale Mobilfunknetz 2 an das ausländische Mobilfunknetz 1.

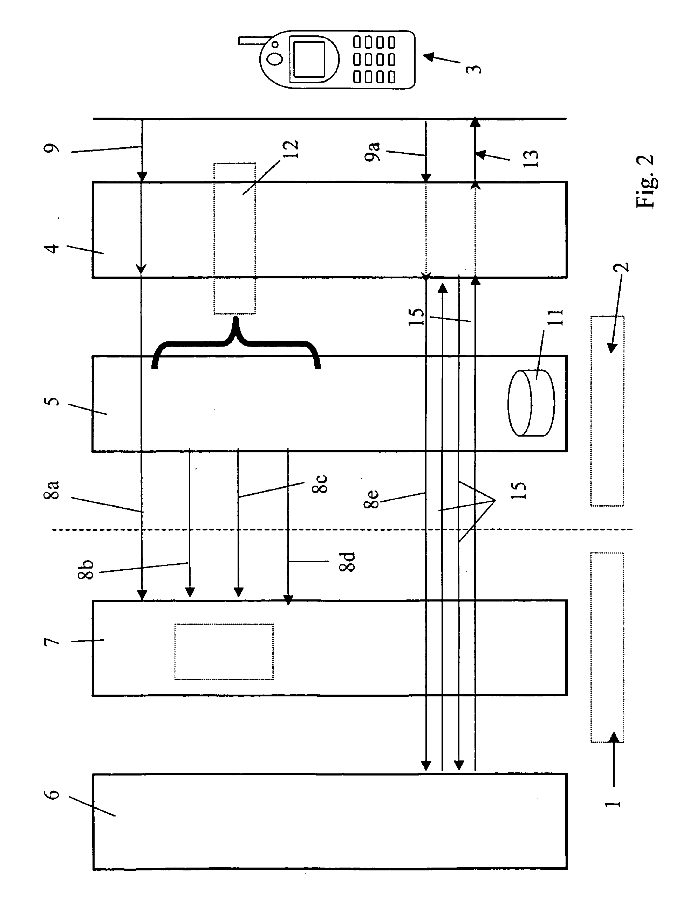

Das in Figur 2 dargestellte Verfahren zeigt, dass alle vom ausländischen Mobilfunkgerät 3 ausgehenden "Update Location"-Nachrichten 8a bis 8d aus dem nationalen Mobilfunknetz 2 von dem Steering-Server 7 des Roaming-Partners abgefangen und keine Fehlermeldung oder Bestätigung an das nationale Mobilfunknetz 2 zurück sendet, während im Mobilfunkgerät 3 ein Timer abläuft.

Das Ausbleiben von Fehlermeldungen oder Bestätigungen vom Heimatnetz 1 des ausländischen Mobilfunkteilnehmers wird mittels Einsatz eines national installierten Anti-Steering-Server 5 erkannt, wobei dieser wiederum mehrfach "Location Update"-Versuche innerhalb einer bestimmten Zeit simuliert und dem Heimatnetz 1 des ausländischen Mobilfunkteilnehmers eine manuelle Mobilnetzauswahl des Mobilgerätes 3 simuliert.

Somit wird der ausländische Mobilfunkteilnehmer in dem priorisierten Mobilfunknetz des nationalen Mobilfunknetzes 2 eingebucht.

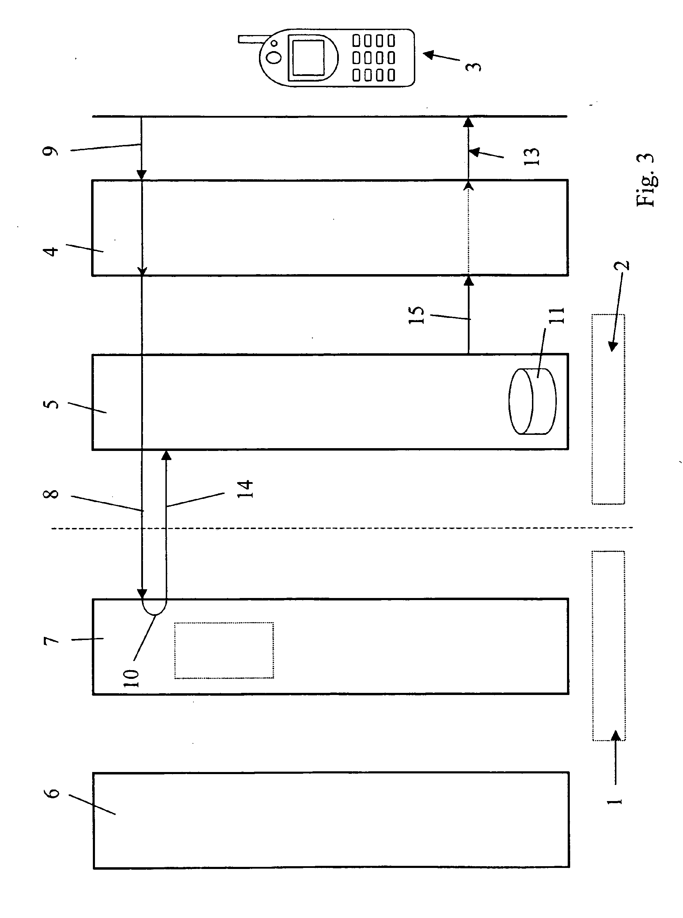

Das in der Figur 3 dargestellte Verfahren zeigt ein ähnlich ablaufendes Verfahren gemäß Figur 1.

Auch hier fängt der Roaming-Steering-Server 7 des ausländischen Mobilfunknetzbetreibers 1 die "Update Location"-Nachricht aus dem nationalen Mobilfunknetz 1 ab und weist den "Location Update"-Versuch mit einer Fehlermeldung 14 a bis 14d zurück.

Der Anti-Steering-Server 5 erkennt die entsprechenden Fehlermeldungen 14a bis 14d und simuliert eine erfolgreiche Bestätigung des "Location Updates" in Richtung Mobilfunkgerät 3.

Somit wird aus der Sicht des Mobilfunkgerätes 3 eine erfolgreiches "Location Update" registriert und eine akzeptierte Einbuchung 13 des Mobilfunkgerätes 3 in das nationale Mobilfunknetz 2 erfolgt.

Bei diesem Verfahren werden keine Teilnehmerdaten von dem Standortverzeichnis HLR 6 zu dem Besucherverzeichnis VLR 4 übertragen, wodurch der Mobilfunkteilnehmer keine Telekommunikationsdienste nutzen kann, mit Ausnahme von Notrufen.

Ein Einbuchen in ein nationales Mobilfunknetz 2 in einem besuchten Land werden verhindert, um eine höhere Signalisierungslast zu vermeiden.

Beim dem Versuch eines Mobilfunkverbindungsaufbaus wird erneut eine "Update Location"-Nachricht vom Besucherverzeichnis VLR 4 zum Heimatnetz 1 gesendet und durch den Anti-Steering-Server 5 entsprechend behandelt.

Eine erfolgreiche Bestätigung des "Location Update" vom Heimatnetz 1 wird dem Mobilfunkgerät 3 des ausländischen Kunden übermittelt - der Kunde bucht sich erfolgreich in das nationale Mobilfunknetz 2 ein und kann seine abonnierten Telekommunikationsdienste uneingeschränkt nutzen.

Nach mehrfachen "Location Update"-Versuchen wechselt das Mobilfunkgerät 3 in ein höher priorisiertes nationales Mobilfunknetz 2.

### Bezugszeichenliste

- 1.: ausländischer Mobilfunknetzbetreiber (roaming operator)
- 2.: nationaler Mobilfunknetzbetreiber (z.B. T-Mobile International AG)
- 3.: Mobilfunkgerät
- 4.: Besucherverzeichnis VLR (visitors location register)
- 5.: Anti- (Gegen) Steuerungs-Server
- 6.: Standortverzeichnis HLR (home location register)
- 7.: Steuerungs-Server
- 8.: Einbuchungsvorgang 8a, 8b, 8c, 8d, 8e
- 9.: Anfrage 9a
- 10.: Zurückweisung 10a, 10b, 10c, 10e
- 11.: Datenbank
- 12.: Zeitspanne
- 13.: akzeptierte Einbuchung eines Mobilfunkgerätes in ein nationales Mobilfunknetz
- 14.: Fehlermeldung 14a, 14b, 14c, 14d
- 15.: Rückmeldung

## Patentansprüche

1. Verfahren zur Abwehr von Roaming-Steering Mechanismen, wobei das Verfahren eine Einbuchung eines ausländischen Mobilfunkgerätes (3) in ein besuchtes nationales Mobilfunknetz ausführt, wenn zwischen dem Betreiber des ausländischen Mobilfunknetzes des ausländischen Mobilfunkgerätes und dem Betreiber des nationalen Mobilfunknetzes ein Roaming-Abkommen zur gegenseitigen Verrechnung von Mobilfunkleistungen besteht, wobei das ausländische Mobilfunkgerät (3) beim Einbuchen eine Anfrage (9; 9a) in Form einer Location Update Nachricht (8a) an das besuchte nationale Mobilfunknetz (2) übermittelt, und ein im besuchten nationalen Mobilfunknetz (2) installierter Anti-Roaming-Steering-Server (5) manipulierte Fehlermeldungen (14a bis 14d) erkennt und mittels geeignetem Einfluss auf Signalisierungsabläufe eine gezielte Manipulation des Einbuchungsvorganges des ausländischen Mobilfunkgeräts (3) ausführt, wobei das Verfahren die Schritte umfasst,
a) dass die Location Update Nachricht über den Anti-Roaming-Steering-Server (5) im nationalen Mobilfunknetz (2) geführt wird,
b) dass die Location Update Nachricht von einem Roaming-Steering-Server (7) des Betreibers des ausländischen Mobilfunknetzes abgefangen und mit einer Fehlermeldung in das nationale Mobilfunknetz (2) zurückgewiesen wird,
c) dass der Anti-Roaming-Steering-Server (5) die Fehlermeldung (14a bis 14d) erkennt und in einer Datenbasis (11) des Anti-Roaming-Steering-Servers (7) des Betreibers des nationalen Mobilfunknetzes (2) ermittelt, ob und mit welchem Verfahren ein Anti-Steering durchgeführt wird,
d) dass im Falle ein Anti-Steering durchgeführt wird, die Fehlermeldung des Roaming-Steering-Servers (7) des Roaming-Operators im Anti-Roaming-Steering-Server (5) des Betreibers des nationalen Mobilfunknetzes (2) abgefangen und nicht zum Mobilfunkgerät weitergeleitet wird,
e) dass der Anti-Roaming-Steering-Server (5) eine erfolgreiche Location Update Nachricht simuliert und an das im nationalen Mobilfunknetz (2) befindliche ausländische Mobilfunkgerät (3) weiterleitet, wodurch ein erfolgreiches Location Update von dem Mobilfunkgerät (3) registriert wird;
**dadurch gekennzeichnet,**
f) **dass** keine Teilnehmerdaten von dem Standortverzeichnis HLR (6) zu dem Besucherverzeichnis VLR (4) übertragen werden, wodurch das ausländische Mobilfunkgerät (3) keine Telekommunikationsdienste nutzen kann, mit Ausnahme von Notrufen und dadurch ein Einbuchen in das nationale Mobilfunknetz (2) verhindert wird, um eine höhere Signalisierungslast zu vermeiden,

2. Verfahren nach Anspruch 1, **dadurch gekennzeichnet, dass** ein Einbuchungsvorgang in Form von Location Update Nachrichten (8a bis 8e) des ausländischen Mobilfunkgerätes (3), welches sich in dem besuchten nationalen Mobilfunknetz (2) befindet mittels der Anfrage (9, 9a) über den im besuchten nationalen Mobilfunknetz (2) installierten Anti-Roaming-Steering-Server (5) ausgeführt wird.

3. Verfahren nach Anspruch 1 oder 2, **dadurch gekennzeichnet, dass** von einem im ausländischen Mobilfunknetz (1) installierten Roaming-Steering-Server (7) des ausländischen Netzbetreibers die Location Update-Nachricht (8a) abgefangen und mit einer entsprechenden Fehlermeldung (14a bis 14d) in das nationale Mobilfunknetz (2) zurückverwiesen wird.

4. Verfahren nach einem der vorhergehenden Ansprüche 1 bis 3, **dadurch gekennzeichnet, dass** der Roaming-Steering-Server (7) des ausländischen Mobilfunknetzes (1) die Location-Update Nachricht aus dem nationalen Mobilfunknetz (2) abfängt und das Senden von Fehlermeldungen (14a bis 14d) oder einer Bestätigung an das nationale Mobilfunknetz (2) unterbindet.

## Claims

1. Method for blocking roaming steering mechanisms, wherein the method performs log-on of a foreign mobile telephone device (3) to a national mobile telephone network being visited when there is a roaming agreement for mutual charging for mobile telephone services between the operator of the foreign mobile telephone network of the foreign mobile telephone device and the operator of the national mobile telephone network, wherein upon log-on the foreign mobile telephone device (3) transmits a request (9; 9a) in the form of a location update message (8a) to the national mobile telephone network (2) being visited, and an anti-roaming steering server (5) which is installed in the national mobile telephone network (2) being visited detects manipulated error messages (14a to 14d) and, by suitable influence on signalling procedures, performs targeted manipulation of the log-on operation of the foreign mobile telephone device (3), wherein the method comprises the steps
a) that the location update message is directed via the anti-roaming steering server (5) in the national mobile telephone network (2),
b) that the location update message is intercepted by a roaming steering server (7) of the operator of the foreign mobile telephone network and referred with an error message back to the national mobile telephone network (2),
c) that the anti-roaming steering server (5) detects the error message (14a to 14d) and, in a database (11) of the anti-roaming steering server (7) of the operator of the national mobile telephone network (2), determines whether and by what method anti-steering will be carried out,
d) that, in the event that anti-steering is carried out, the error message of the roaming steering server (7) of the roaming operator is intercepted in the anti-roaming steering server (5) of the operator of the national mobile telephone network (2) and is not passed on to the mobile telephone device,
e) that the anti-roaming steering server (5) simulates a successful location update message and passes it on to the foreign mobile telephone device (3) located in the national mobile telephone network (2), with the result that a successful location update is recorded by the mobile telephone device (3);
**characterised in that**
f) no subscriber data are transmitted from the home location register HLR (6) to the visitor location register VLR (4), with the result that the foreign mobile telephone device (3) cannot use any telecommunications services, with the exception of emergency calls, and so logging on to the national mobile telephone network (2) is prevented in order to avoid a higher signalling load.

2. Method according to claim 1, **characterised in that** a log-on operation is performed in the form of location update messages (8a to 8e) of the foreign mobile telephone device (3) which is located in the national mobile telephone network (2) being visited, by means of the request (9, 9a) via the anti-roaming steering server (5) which is installed in the national mobile telephone network (2) being visited.

3. Method according to claim 1 or 2, **characterised in that** the location update message (8a) is intercepted by a roaming steering server (7) of the foreign network operation, which is installed in the foreign mobile telephone network (1), and referred with a corresponding error message (14a to 14d) back to the national mobile telephone network (2).

4. Method according to one of the preceding claims 1 to 3, **characterised in that** the roaming steering server (7) of the foreign mobile telephone network (1) intercepts the location update message from the national mobile telephone network (2) and prevents the transmission of error messages (14a to 14d) or an acknowledgement to the national mobile telephone network (2).

## Revendications

1. Procédé de protection contre les mécanismes d'orientation d'itinérance, étant précisé que le procédé effectue un enregistrement d'un téléphone mobile étranger (3) dans un réseau de téléphonie mobile national visité s'il existe entre l'opérateur du réseau mobile étranger du téléphone mobile étranger et l'opérateur du réseau mobile national un accord d'itinérance pour une facturation mutuelle de prestations de téléphonie mobile, que le téléphone mobile étranger (3), lors de l'enregistrement, transmet au réseau mobile national visité (2) une demande (9 ; 9a) sous la forme d'un message de localisation (8a) et qu'un serveur anti-orientation d'itinérance (5) installé dans le réseau mobile national visité (2) détecte les messages d'erreur manipulés (14a à 14d) et procède à une manipulation ciblée de l'opération d'enregistrement du téléphone mobile étranger (3) en influençant comme il faut les déroulements de signalisation,
étant précisé que le procédé comprend les étapes suivantes :
a) le message de localisation passe par le serveur anti-orientation d'itinérance (5) prévu dans le réseau mobile national (2),
b) le message de localisation est intercepté par un serveur d'orientation d'itinérance (7) de l'opérateur du réseau mobile étranger et est renvoyé, avec un message d'erreur, au réseau mobile national (2),
c) le serveur anti-orientation d'itinérance (5) détecte le message d'erreur (14a à 14d) et détermine, dans une base de données (11) du serveur anti-orientation d'itinérance (7) de l'opérateur du réseau mobile national (2), si une anti-orientation est effectuée et avec quel procédé,
d) au cas où une anti-orientation est effectuée, le message d'erreur du serveur d'orientation d'itinérance (7) de l'opérateur d'itinérance est intercepté dans le serveur anti-orientation d'itinérance (5) de l'opérateur du réseau mobile national (2) et n'est pas transmis au téléphone mobile,
e) le serveur anti-orientation d'itinérance (5) simule un message de localisation réussi et le transmet au téléphone mobile étranger (3) qui se trouve dans le réseau mobile national (2), moyennant quoi une localisation réussie du téléphone mobile (3) est enregistrée ;
**caractérisé**
f) **en ce qu'**aucune donnée d'abonné n'est transmise à partir de l'enregistreur de localisation nominal HLR (6) à l'enregistreur de localisation visité VLR (4), moyennant quoi le téléphone mobile étranger (3) ne peut utiliser aucun service de télécommunication, à l'exception des appels d'urgence, et un enregistrement dans le réseau mobile national (2) est ainsi empêché afin d'éviter une charge de signalisation accrue.

2. Procédé selon la revendication 1, **caractérisé en ce qu'**une opération d'enregistrement sous la forme de messages de localisation (8a à 8e) du téléphone mobile étranger (3) qui se trouve dans le réseau mobile national visité (2) est effectuée à l'aide de la demande (9, 9a) par l'intermédiaire du serveur anti-orientation d'itinérance (5) installé dans le réseau mobile national visité (2).

3. Procédé selon la revendication 1 ou 2, **caractérisé en ce que** le message de localisation (8a) est intercepté par un serveur d'orientation d'itinérance (7), installé dans le réseau mobile étranger (1), de l'opérateur étranger, et est renvoyé, avec le message d'erreur (14a à 14d) correspondant, au réseau mobile national (2).

4. Procédé selon l'une des revendications 1 à 3 précédentes, **caractérisé en ce que** le serveur d'orientation d'itinérance (7) du réseau mobile étranger (1) intercepte le message de localisation à partir du réseau mobile national (2) et empêche l'envoi de message d'erreurs (14a à 14d) ou d'une confirmation au réseau mobile national (2).
